Europäisches Patentamt

European Patent Office

Office européen des brevets

(11) Publication number: **0 290 230**
**A2**

## (12) EUROPEAN PATENT APPLICATION

(21) Application number: **88304009.9**

(22) Date of filing: **04.05.88**

(51) Int. Cl.⁴: **C 08 L 67/02**
C 08 L 59/00
//(C08L67/02,83:04),
(C08L59/00,83:04)

(30) Priority: **08.05.87 JP 112074/87**
**29.05.87 JP 134177/87**

(43) Date of publication of application:
**09.11.88 Bulletin 88/45**

(84) Designated Contracting States:
**AT BE CH DE ES FR GB GR IT LI LU NL SE**

(71) Applicant: **POLYPLASTICS CO. LTD.**
**30, Azuchimachi 2-chome**
**Higashi-ku Osaka-shi Osaka (JP)**

(72) Inventor: **Endo, Toshihiko**
**324, Miyashita**
**Fuji-shi Shizuoka (JP)**

**Matsunaga, Nobuyuki**
**104, Kamiyokowari**
**Fuji-shi Shizuoka (JP)**

(74) Representative: **Jackson, Peter et al**
**HYDE, HEIDE & O'DONNELL 146 Buckingham Palace**
**Road**
**London SW1W 9TR (GB)**

(54) **Thermoplastic resin composition.**

(57) A thermoplastic resin composition is improved in durability to abrasion and comprises a thermoplastic polyester resin or polyacetal resin of 99.9 to 80.0 parts by weight and a silicon oil having a viscosity of 150,000 cSt or more of 0.1 to 20 parts by weight. Further improvements are obtained by additionally including up to 20 parts by weight of a lubricating oil having a viscosity of 3000 cSt or less.

EP 0 290 230 A2

Bundesdruckerei Berlin

## Description

## THERMOPLASTIC RESIN COMPOSITION

The present invention relates to a resin composite capable of providing a sliding member with excellent long-term frictional characteristics and producing minimal frictional noise when sliding, in particular to a thermoplastic resin composite comprising a thermoplastic polyester resin or a polyacetal resin and a silicon oil having a viscosity of 150,000 cSt or more. The term "viscosity" as used herein refers to kinematic viscosity, measured in centistokes.

(Prior Art)

Thermoplastic polyester resins, such as polybutylene terephthalate and polyethylene terephthalate, or polyacetal resins have been used in a remarkably wide field as engineering resins in recent years since they are superior in mechanical properties, electric properties heat-resistance, chemical resistance and workability. The use of these resins under ever more severe conditions and the continuing expansion of the field in which they are used has led to requirements for even better properties in an increasing number of cases. One of such requirements is for further improvement of frictional characteristics, including improved long-term durability and a reduction of frictional noise due to sliding or the like in such fields as sliding members and mechanical parts of cars and electric and electronic products.

For example, (1) a method, in which solid lubricants, such as molybdenum disulfide and graphite, are added; (2) a method, in which a powdery and fibrous poly-tetrafluoro-ethylene resin is added; (3) a method, in which liquid or semi-solid lubricants, such as petroleum lubricating oils, synthetic lubricating oils, aliphatic alcohols or their esters, are added; and the like have been known as a method of improving the frictional and abrasive characteristics of thermoplastic resins. It goes without saying that the frictional and abrasive characteristics can be improved even by these known methods, and in particular the requirements can be sufficiently met in many cases when used for a short time under the conditions of sliding at a low speed and a low load. However, problems have occurred in that the frictional characteristics become insufficient as the sliding condition becomes higher in speed and load and the frictional characteristics are much deteriorated with an increase of sliding time even under the condition of sliding at a low speed and a low load, whereby the long-term durability and fidelity are not achieved. In addition, a method in which polyethylene, polytetrafluoroethylene and the like are added to soften resins, has been generally used as a method of reducing a frictional noise when sliding. However, with this method, a silencing property capable of meeting the requirements cannot be always attained. In addition, a problem has occurred in that physical properties, such as mechanical strength, are lowered.

As above described, according to the conventional known methods it is not possible to meet the requirements, which are being increasingly made more severe, for frictional and abrasive characteristics. in particular characteristics under the conditions of sliding at a high speed and a high load, including long-term characteristics or silencing characteristics when sliding. Accordingly, their improvement has been much desired.

(Summary of the Invention)

The present inventors have found from their repeated earnest investigations of a method of solving such problems to improve the long-term frictional and abrasive characteristics and lower the frictional noise when sliding without spoiling excellent properties incidental to thermoplastic polyester resins and polyacetal resins that the addition of silicon oils having the specified high viscosity is remarkably effective and that the further addition of lubricating oils having the specified low viscosity provides with the said silicon oil a remarkable synergistic effect. Thus, the present inventon has been achieved.

Accordingly, the present invention provides a thermoplastic resin composite comprising a thermoplastic polyester resin or a polyacetal resin and 0.1 to 20 parts by weight, based on the weight of the composition, of a silicon oil having a viscosity of 150,000 cSt or more.

In one advantageous aspect of the invention the composition additionally comprises 0.05 to 20 parts by weight, based on the weight of the composition, of a lubricating oil having a viscosity of 3000 cSt or less.

The thermoplastic polyesters used in the present invention include polyesters obtained by the poly-condensation of di-carboxylic compounds and dihydroxy compounds, the poly-condensation of oxycarboxylic compounds, the poly-condensation of these three ingredients mixture and the like. Both homo-polyesters and copolyesters are effective for the present invention.

The dicarboxylic acid compounds used in the present invention include known dicarboxylic acid compounds, such as terephthalic acid, isophthalic acid, naphthalene dicarboxylic acid, diphenyl dicarboxylic acid, diphenylether dicarboxylic acid, diphenylethane dicarboxylic acid, cyclohexane dicarboxylic acid, adipic acid and sebacic acid, and alkyl-, alkoxy- or halogen-substituted compounds thereof. In addition, these dicarboxylic acid compounds can be used also in the form of ester-formable derivatives, such as lower alcohol esters, for example dimethyl ester. In the present invention, the above described compounds are used singly or in combination.

Next, the dihydroxy compounds include dihydroxy compounds, such as ethylene glycol, propylene glycol, butane diol, neopentyl glycol, hydroquinone, resorcine, dihydroxy phenyl, naphthalene diol, dihydroxydiphenyl ether, cyclohexane diol and 2, 2'-bis (4-hydroxyphenyl) progane, alkyl-, alkoxy, or halogen-substituted compounds thereof and the like. They can be used singly or in combination.

In addition, oxycarboxylic acids include oxycarboxylic acids, such as oxybenzoic acid, oxynaphthoeic acid and di-phenylene oxycarboxylic acid, and alkyl-, alkoxy- or halogen-substituted compounds thereof. Also ester-formable derivatives of these compounds can be used. In the present invention, these compounds can be used singly or in combination.

According to the present invention, every thermoplastic polyester formed by the poly-condensation of the above described compounds as monomers can be used singly or in combination. It is desired to use a polyalkylene terephthalate, preferably polybutylene terephthalate. In this case, the effects of the present invention are notable.

In additon, in the present invention, the thermoplastic polyesters may be denatured by known methods, such as cross linkage and graft-polymerization.

The polyacetal resins used in the present invention include polyacetal homopolymers and polyacetal copolymers of which greater part of a main chain is formed of an oxymethylene chain. In addition, even though polyacetals are denatured by crosslinking or graft-copolymerizing according to the known methods, they can be used as the basic resin and the effects of the present invention can be exhibited.

Next, dimethyl-polysiloxane or compounds obtained by substituting a part of methyl groups in dimethyl-polysiloxane with at least one kind selected from the group consisting of hydrogen, phenyl group, halogenized phenyl group, halogenized alkyl group, fluoroester group and the like having a very high viscosity of 150,000 cSt (at 25°C) as measured according to ASTM D-445 are used as the silicon oils added to the above described thermoplastic resins in the present invention.

If silicon oils having a viscosity lower than 150,000 cSt, in particular a viscosity of 100,000 cSt or less, are added, the initial frictional and abrasive characteristics are improved but the long-term frictional and abrasive characteristics or the frictional noise when sliding, which are aims of the present invention, cannot be sufficiently improved. If rubbery silicon resins having a high degree of polymerization are used, not only it is remarkably difficult to disperse them uniformly in the resins, such that the improvement of frictional and abrasive characteristics can not be expected, but also mechanical properties are spoiled according to the circumstances, thus silicon oils having a viscosity of 200,000 to 1,000,000 cSt are more preferably used.

In addition, in the present invention, the high viscosity silicon oils are added in a proportion of 0.1 to 20 parts by weight based on the thermoplastic resin of 99.9 to 80 parts by weight. If the said silicon oils are added in proportions less than these, a sufficient improvement of frictional and abrasive characteristics cannot be attained, while if the silicon oils are added in proportions more than these, the workability, mechanical properties and the like are remarkably lowered according to circumstances, which is not desirable. Similarly the low viscosity lubricating oil, are added in a proportion of 0.05 to 20 parts by weight based on 99.9 to 60 parts by weight of the thermoplastic resin. If they are added at a ratio less than this, the synergistic improvement of frictional and abrasive characteristics cannot be attained while if they are added at a ratio more than this, the workability, mechanical properties and the like are considerably lowered according to circumstances.

Accordingly, in view of the balance of the short-term and long-term frictional and abrasive characteristics, other properties, workability and the like, it is preferred that the silicon oils are added in a proportion of 0.3 to 10 parts by weight and that the lubricating oils are added in a proportion of 0.2 to 10 parts by weight.

In addition, in order to attain the synergistic effect for the improvement of frictional and abrasive characteristics more effectively, it is desirable that the low-viscosity lubricating oils and the high-viscosity silicon oils are added at a ratio of 1/5 to 5/1.

The high viscosity silicon oils can be diluted with solvents and the like or can be absorbed by inorganic or organic solid bodies to be added. This is desirable in many cases in view of the workability of the addition of the silicon oils and the dispersivity of the silicon oils. In addition, it is desirable for the improved dispersion of the silicon oils in the resin also to use a dispersion medium at the same time.

In the present invention, the additional use of lubricating oils having a viscosity of 3,000 cSt or less achieves a synergistic effect which appears to remarkably improve the short-term frictional and abrasive characteristics as well as the long-term frictional and abrasive characteristics. In order to attain the synergistic effect more effectively, it is desirable to use those lubricating oils having a viscosity of 2,000 cSt or less.

Suitable examples of the said lubricating oils for use in the present invention are known lubricating oils such as synthetic lubricating oils, petroleum lubricating oils and plant and animal oils. At least one kind selected from the group consisting of them is added. The petroleum lubricating oils are oils mainly comprising hydrocarbons of the paraffin series, naphthene series and the like obtained by the fractional distillation and the rectification of petroleum. They include turbine oil, machine oil, engine oil, gear oil, spindle oil, refrigerator oil, paraffin oil and the like.

Examples of the synthetic lubricating oils include various kinds of (low viscosity) silicon oil, poly-alkylene glycol oil, polyol ester oil, polyphenyl ether oil, diester oil, polyolefin oil and the like.

Examples of the plant and animal oils are oils extracted from a fruit of plants, seed, fatty flesh and the like. They include soybean oil, coconut oil, palm oil, cotton-seed oil, linseed oil, rapeseed oil, castor oil, whale oil, squalene and the like. Also natural and synthetic higher fatty acids and esters thereof, which are main ingredients of these plant and animal oils, are included in the lubricating oils according to the present invention so far as they meet the low viscosity requirements.

In order to improve the properties of the lubricating oils, an antioxidant, extreme pressure agent, abrasion-resisting agent, oily agent, viscosity-improving agent, pour point-lowering agent and the like may be added to them. Also a tackyfier and the like may be added to them to form a grease or a diluent and the like may be added to them. In short, any additive meeting the requirements for the base oil in the present invention can be used.

Preferred examples of the low viscosity lubricating oils are petroleum lubricating oils, in particular oils of the paraffin series, and synthetic lubricating oils, in particular (low viscosity) silicon oils.

Although the reasons for the excellent long-term frictional and abrasive characteristics and silencing properties due to the use of such highly viscous silicon oils are not obvious, the present inventors suspect that such highly viscous silicon oils form a stable film, which cannot be easily separated, on the surface of the resin or in the vicinity of said surface of the resin, whereby the effect is durable. The present inventors also believe that the low viscosity oils used alone are apt to bleed to the surface of the resin, so that the initial frictional characteristics are superior but the viscosity is low (the degree of polymerization is low), whereby the separation and removal of the film are apt to occur, and as a result, the frictional characteristics are lowered with a lapse of the sliding time. Thus in use in combination with high viscosity silicon oils the low viscosity lubricating oils are stably held in the film formed by the high viscosity silicon oils and as a result, excellent frictional characteristics of the low-viscosity lubricating oils can be maintained for a remarkably long time.

In order to further improve the sliding characteristics, solid lubricants, such as graphite, molybdenum disulfide and metal soap, polymers, such as polyethylene resin and polytetrafluoroethylene resin, capable of giving an excellent lubricating property and the like can be added to the composite according to the present invention. In addition, in order to improve physical properties according to objects, various kinds of known additive can be further added.

The additives include anti-oxidants, weather- and light-resisting stabilisers, heat stabilisers, unguents, releasing agents, nucleating agents, silicon oil dispersion agents, antistatic agents, flame retardants, coloring agents and the like.

In addition, fibrous, plate-like and granular inorganic fillers, such as glass fiber, can be added to the composite according to the present invention according to objects. In addition, it goes without saying that other resins or high molecular substances can be supplementarily added.

The composite according to the present invention can be easily prepared by known methods which have been generally used as the methods of preparing the conventional resin composites. For example, a method, in which the ingredients are mixed and then, the mixture is kneaded and extruded in a uniaxial or biaxial extruder to prepare pellets followed by molding, a method, in which pellets having a different composition are once prepared and then, the resulting pellets are blended in an appointed quantity to be subjected to the molding followed by obtaining a molded product having the aimed composition, a method, in which at least one of ingredients is directly charged in a molding machine, and the like can be all applied.

In preparing a composite including both high viscosity silicon oil and low viscosity lubricating oil it is preferred that the high-viscosity silicon oils are first mixed with the low-viscosity lubricating oils and the resulting mixture is then added to the resin. This facilitates the manufacturing operation because the oil mixture is easy to handle.

[Preferred Embodiments]

The present invention is more concretely described below with the reference of the preferred embodiments but not limited by them.

Examples 1 to 9 and Comparative Examples 1 to 8:

A polybutylene terephthalate resin ["DURANEX 2000" manufactured by Polyplastics Co., Ltd.] or a polyacetal resin ["DURACON M90" manufactured by Polyplastics Co., Ltd.] and various kinds of silicon oil having a viscosity of 150,000 cSt or more were blended at a ratio shown in Table 1 and then, the resulting mixture was molten and kneaded in a biaxial extruder to prepare a pellet-like composite. Subsequently, these pellets were injection molded to prepare test pieces which were evaluated. In addition, for comparison also test pieces without containing silicon oils and test pieces containing silicon oils having a viscosity outside of the range according to the present invention were evaluated in the same manner as the above described test pieces. All of the results are shown in Table 1.

In addition, the evaluation of sliding characteristics was carried out by the following methods and that of tensile characteristics was carried out in compliance with the method of ASTM.

Kinematic frictionless characteristics

Kinematic friction factor was measured immediately after the start of sliding and after sliding for 60 minutes at a pressure of 0.75 kg/cm$^2$, a linear speed of 180 mm/sec, and a contact area of 2.0 cm$^2$ with a ABS resin as the opposite material using a Suzuki type friction and abrasion tester. In addition, in order to obtain a standard of the stability, a time until the dynamic friction factor ($\mu$d) amounts to 0.2 was measured.

Frictional noise characteristics

The state of generating the frictional noise during a time while materials of the same kind are scrubbed to each other for 10 hours was observed at a pressure of 3.5 kg/cm$^2$, a linear speed of 50 mm/sec and a contact area of 2.0 cm² using the above described tester.

Examples 10 to 18 and Comparative Examples 9 to 14

Silicon oils having a viscosity of 150,000 cSt or more and various kinds of lubricating oil having a viscosity of 3,000 cSt or less as shown in Table 2 were mixed with a polybutylene terephthalate resin ["DURANEX 2000" manufactured by Polyplastics Co., Ltd.] at a ratio shown in Table 2 and then the resulting mixture was molten and kneaded in a biaxial extruder to prepare a pellet-like composite. Subsequently, these pellets were injection molded to prepare test pieces which were evaluated. In addition, for comparison, also test pieces without containing both the high-viscosity silicon oils and the low-viscosity lubricating oils and test pieces containing merely one of them were evaluated in the same manner as the above described test pieces. The results are shown in Table 2.

Examples 19 to 22 and Comparative Examples 15 to 17

Silicon oils having a viscosity of 150,000 cSt or more and lubricating oils having a viscosity of 3,000 cSt or less as shown in Table 3 were mixed with a polyacetal resin ["DURACON M90" manufactured by Polyplastics Co., Ltd.] at a ratio shown in Table 3 and the evaluation was carried out in the same manner as in Examples 1 to 9. In addition, for comparison, test pieces without containing any one of the high-viscosity silicon oil and the low-viscosity lubricating oil and test pieces without containing both the high-viscosity silicon oil and the low-viscosity lubricating oil were evaluated in the same manner. The results are shown in Table 3.

As will be clear from the above description and preferred embodiments, various kinds of characteristic, such as long-term frictional and abrasive characteristics and frictional noise when sliding, relating to the sliding are remarkably improved by adding a silicon oil having a viscosity of 150,000 cSt or more to a thermoplastic polyester resin or a polyacetal resin. The disadvantage that other physical properties are lowered to a substantial extent does not occur.

Moreover, a synergistic effect appears by adding both a silicon oil having a viscosity of 150,000 cSt or more and a lubricating oil having a viscosity of 3,000 cSt or less to a thermoplastic polyester resin or a polyacetal resin. These in combination further improve various kinds of characteristic relating to the sliding, again without the disadvantage of lowering other physical properties to such an extent that they are substantially called in question.

As above described, composites according to the present invention have excellent balanced properties and can be suitably used as sliding members, such as gears, bearing and keyboard parts, in such fields as cars, electric and electronic instruments, office machinery and miscellaneous goods.

Table 1

| | | Composition | | | | Dynamic frictional characteristics | | | Frictional noise characteristics | Tensile characteristics | | Note |
|---|---|---|---|---|---|---|---|---|---|---|---|---|
| | | Resin | | Silicon oil | | Friction factor (μd) | | Time until the friction factor amounts to 0.2 (min.) | | Tensile strength (kg/cm²) | Elongation (%) | |
| | | Kind | Quantity added (parts by weight) | Viscosity (cSt) | Quantity added (parts by weight) | Initial | After 60 minutes | | | | | |
| Example | 1 | Poly-butylene terephthalate | 99.5 | 300,000 | 0.5 | 0.16 | 0.32 | 7 | Slight noise | 531 | 52 | Excellent extrudability Excellent moldability |
| | 2 | " | 99 | " | 1 | 0.15 | 0.27 | 10 | " | 512 | 76 | " |
| | 3 | " | 98 | " | 2 | 0.15 | 0.23 | 30 | Almost none | 474 | 138 | " |
| | 4 | " | 95 | " | 5 | 0.15 | 0.18 | 120< | " | 412 | 200< | " |
| | 5 | " | 99 | 1,000,000 | 1 | 0.17 | 0.28 | 12 | Slight noise | 521 | 81 | " |
| | 6 | " | 98 | " | 2 | 0.14 | 0.22 | 35 | Almost none | 466 | 130 | " |
| | 7 | " | 95 | " | 5 | 0.15 | 0.18 | 120< | " | 407 | 200< | " |
| Comparative example | 1 | " | 100 | – | – | 0.30 | 0.50 | 0 | Large | 569 | 38 | " |
| | 2 | " | 98 | 500 | 2 | 0.11 | 0.46 | 2 | Middle to small | 472 | 124 | Excellent extrudability Slightly unmeasurable moldability |
| | 3 | " | 99 | 5,000 | 1 | 0.14 | 0.47 | 2 | " | 516 | 69 | Excellent extrudability Excellent moldability |
| | 4 | " | 98 | " | 2 | 0.11 | 0.47 | 3 | " | 465 | 146 | " |
| | 5 | " | 95 | " | 5 | 0.12 | 0.44 | 5 | " | 409 | 200< | Excellent extrudability Slightly unmeasurable moldability |
| | 6 | " | 98 | 60,000 | 2 | 0.12 | 0.43 | 4 | " | 468 | 142 | " |

0 290 230

Table 1 (cont.)

| | | Composition | | | | Dynamic frictional characteristics | | | Frictional noise character- istics | Tensile characteristics | | Note |
|---|---|---|---|---|---|---|---|---|---|---|---|---|
| | | Resin | | Silicon oil | | Friction factor ($\mu$d) | | Time until the frict- | | Tensile strength | Elong- ation | |
| | | Kind | Quantity added (parts by weight) | Viscosity (cSt) | Quantity added (parts by weight) | Initial | After 60 minutes | ion factor amounts to 0.2 (min.) | | (kg/cm$^2$) | (%) | |
| Example | 8 | Polyacetal | 98 | 300,000 | 2 | 0.15 | 0.17 | 120 < | Almost none | 521 | 142 | Excellent extrudability Excellent moldability |
| | 9 | " | 98 | 1,000,000 | 2 | 0.14 | 0.17 | 120 < | " | 517 | 155 | " |
| Comparative example | 7 | Polyacetal | 100 | – | – | 0.21 | 0.38 | 0 | Large | 625 | 67 | " |
| | 8 | " | 98 | 5,000 | 2 | 0.13 | 0.33 | 10 | Middle | 518 | 148 | " |

Table 2

| Example | | Composition | | | | | Dynamic frictional characteristics | | | Frictional noise characteristics | Tensile characteristics | | Note |
|---|---|---|---|---|---|---|---|---|---|---|---|---|---|
| | | Resin (ingredient A) | | High-viscosity silicon oil (ingredient B) | | Low-viscosity lubricating oil (ingredient C) | | Dynamical friction factor ($\mu d$) | | | | | | |
| | | Kind | Viscosity (cSt) | Quantity added (parts by weight) | Kind | Quantity added (parts by weight) | Ini-tial | After one hour | After 6 hours | | Tensile strength (kg/cm²) | Elong-ation (%) | |
| | | Quantity added (parts by weight) | | | | | | | | | | | |
| | 10 | Poly-butylene terephthalate (98) | 300,000 | 1 | Silicon oil 10 cSt | 1 | 0.09 | 0.10 | 0.16 | Almost none | 472 | 142 | Excellent extrudability Excellent moldability |
| | 11 | " (98) | " | 1 | Silicon oil 350 cSt | 1 | 0.10 | 0.12 | 0.18 | " | 465 | 129 | " |
| | 12 | " (98) | 1,000,000 | 1 | Silicon oil 10 cSt | 1 | 0.09 | 0.11 | 0.14 | " | 470 | 136 | " |
| | 13 | " (99) | " | 0.5 | Paraffine oil 1000 cSt | 0.5 | 0.11 | 0.15 | 0.26 | Slight noise | 521 | 68 | " |
| | 14 | " (97.5) | " | 0.5 | " | 2 | 0.08 | 0.11 | 0.23 | " | 458 | 71 | Slightly poor extrudability Slightly poor moldability |
| | 15 | " (98) | " | 1 | " | 1 | 0.09 | 0.10 | 0.17 | Almost none | 469 | 104 | Excellent extrudability Excellent moldability |
| | 16 | " (97) | " | 2 | " | 1 | 0.09 | 0.09 | 0.15 | " | 439 | 140 | " |
| | 17 | " (96) | " | 3 | " | 1 | 0.11 | 0.11 | 0.13 | " | 416 | 200< | " |
| | 18 | " (98) | " | 1 | Tetraphenyl ether 350 cSt | 1 | 0.11 | 0.13 | 0.21 | " | 474 | 112 | " |

Table 2 (cont.)

| | | Composition | | | | | Dynamic frictional characteristics | | | Frictional noise characteristics | Tensile characteristics | | Note |
|---|---|---|---|---|---|---|---|---|---|---|---|---|---|
| | | Resin (ingredient A) | | High-viscosity silicon oil (ingredient B) | | Low-viscosity lubricating oil (ingredient C) | | Dynamical friction factor (μd) | | | | | | |
| | | Kind | Viscosity (cSt) | Quantity added (parts by weight) | Kind | Quantity added (parts by weight) | Initial | After one hour | After 6 hours | | Tensile strength (kg/cm²) | Elongation (%) | |
| | | Quantity added (parts by weight) | | | | | | | | | | | |
| Comparative example | 9 | Poly-butylene terephthalate | – | – | – | – | 0.30 | 0.50 | – | Large | 569 | 38 | Excellent extrudability Excellent moldability |
| | 10 | " | – | – | Silicon oil 10 cSt | 1 | 0.11 | 0.45 | – | Middle | 518 | 92 | Poor extrudability Poor moldability |
| | 11 | " | – | – | Paraffine oil 1000 cSt | 1 | 0.11 | 0.47 | – | Middle | 511 | 74 | " |
| | 12 | " | 1,000,000 | 2 | – | – | 0.14 | 0.22 | 0.34 | Almost none | 466 | 130 | Excellent extrudability Excellent moldability |
| | 13 | " | 60,000 | 1 | Silicon oil 10 cSt | 1 | 0.09 | 0.41 | – | Middle to small | 471 | 142 | Slightly poor extrudability Slightly poor moldability |
| | 14 | " | " | 1 | Paraffine oil 1000 cSt | 1 | 0.09 | 0.43 | – | " | 464 | 107 | " |

0 290 230

Table 3

| | | Composition | | | | | | Dynamic frictional characteristics | | | Frictional noise characteristics | Tensile characteristics | | Note |
|---|---|---|---|---|---|---|---|---|---|---|---|---|---|---|
| | | Resin (ingredient A) | | High-viscosity silicon oil (ingredient B) | | Low-viscosity lubricating oil (ingredient C) | | Dynamical friction factor (μd) | | | | Tensile strength (kg/cm²) | Elongation (%) | |
| | | Kind / Quantity added (parts by weight) | | Viscosity (cSt) | Quantity added (parts by weight) | Kind | Quantity added (parts by weight) | Initial | After one hour | After 6 hours | | | | |
| Example | 19 | Polyacetal (98) | | 300,000 | 1 | Silicon oil 10 cSt | 1 | 0.10 | 0.13 | 0.16 | Almost none | 522 | 148 | Excellent extrudability Excellent moldability |
| | 20 | " (98) | | 1,000,000 | 1 | " | 1 | 0.10 | 0.12 | 0.18 | " | 515 | 137 | " |
| | 21 | " (97) | | " | 2 | " | 1 | 0.11 | 0.12 | 0.14 | " | 468 | 164 | " |
| | 22 | " (97) | | " | 2 | Paraffine oil 1000 cSt | 1 | 0.10 | 0.13 | 0.15 | " | 472 | 153 | " |
| Comparative example | 15 | Polyacetal (100) | | – | – | – | – | 0.21 | 0.38 | 0.41 | Large | 625 | 67 | Excellent extrudability Excellent moldability |
| | 16 | " (98) | | 1,000,000 | 2 | – | – | 0.14 | 0.17 | 0.24 | Almost none | 517 | 155 | " |
| | 17 | " (99) | | – | – | Silicon oil 10 cSt | 1 | (0.09)* | (0.27)* | (0.39)* | (Middle)* | (548)* | (78)* | Remarkably poor extrudability Remarkably poor moldability |

\* The moldability is remarkably poor (poorly measurable) and it is difficult to say that it is a desirable test piece.

0 290 230

## Claims

1. A thermoplastic resin composition comprising a thermoplastic polyester or polyacetal and 0.1 to 20 parts by weight based on the weight of the composition of a silicon oil having a viscosity of 150,000 cSt or more.

2. A thermoplastic resin composition as set forth in Claim 1 which also comprises 0.05 to 20 parts by weight, based on the weight of the composition, of a lubricating oil having a viscosity of 3,000 cSt or less.

3. A thermoplastic resin composition as set forth in Claim 1, in which said thermoplastic polyester resin is a poly-alkylene terephthalate.

4. A thermoplastic resin composition as set forth in Claim 2, in which said thermoplastic polyester resin is a polybutylene terephthalate.

5. A thermoplastic resin composition as set forth in any preceding claim, in which the silicon oil is dimethyl polysiloxane or a derivative thereof obtained by substituting a part of the methyl groups by a substituent selected from one or more of hydrogen and phenyl-, halogenised phenyl-, halogenised alkyl- and fluoroester groups.

6. A thermoplastic resin composition as set forth in any preceding claim, in which the silicon oil has a viscosity of 200,000 to 1,000,000 cSt.

7. A thermoplastic resin composition as set forth in any preceding claim, in which the quantity of silicon oil is 0.3 to 10 parts by weight.

8. A thermoplastic resin composition as set forth in any one of claims 2 to 7, in which the lubricating oil is a paraffin oil.

9. A thermoplastic resin composition as set forth in any one of claims 2 to 8, in which the lubricating oil content is 0.2 to 10 parts by weight.

10. A thermoplastic resin composition as set forth in any one of claims 2 to 9, in which the lubricating oil has a viscosity of 2000 cSt or less.

11. A thermoplastic resin composition as set forth in any one of claims 2 to 10, in which the ratio of high viscosity silicon oil to low viscosity lubricating oil is in the range 1:5 to 5:1.

12. A method of preparing a thermoplastic resin composition as claimed in any one of claims 2 to 11, in which the high viscosity silicon oils are first mixed with the low viscosity lubricating oils and the resulting mixture is then added to the thermoplastic polyester or polyacetal.